# EUROPEAN PATENT APPLICATION

(11) **EP 3 933 181 A1**
(43) Date of publication of application: **05.01.2022**
(21) Application number: 21192905.4
(22) Date of filing: 16.07.2014
(51) Int. Cl.: F02C 3/107, F02C 7/36, F02K 3/06

(54) **HIGH THRUST GEARED GAS TURBINE ENGINE**

(30) Priority: 20.08.2013 US 201361867659 P
(62) Divisional of application: 14851172.8
(71) Applicant: Raytheon Technologies Corporation, Farmington, CT 06032 (US)
(72) Inventor: SCHWARZ, Frederick M., Glastonbury, 06033 (US); HASEL, Karl L., Manchester, 06040 (US); MERRY, Brian D., Andover, 06232 (US)
(74) Representative: Dehns

(57) **Abstract**

A ratio of an outer diameter (d₁) of a fan hub (209) at a leading edge (210) of the blades (42) to an outer tip diameter (d₂) of the blades (42) at the leading edge (210) is greater than or equal to about 0.24 and less than or equal to about 0.38. The fan tip diameter (d₂) is greater than or equal to about 84 inches (213.36 centimeters) and a fan tip speed is less than or equal to about 1050 ft / second (320.04 meters / second). A bypass ratio, a gear ratio and an AN² value are also claimed. The fan drive turbine (46; 106) has between three and six stages.

## Description

### CROSS-REFERENCE TO RELATED APPLICATION

This application claims priority to U.S. Provisional Application No. 61/867,659, filed August 20, 2013.

### BACKGROUND

This application relates to a gas turbine engine, wherein a fan is driven through a gear reduction by a fan drive turbine and an overall thrust of the engine is greater than or equal to about 33,000 lbf (146.79 kN).

Gas turbine engines are known and, typically, include a fan which delivers air into a bypass duct as propulsion air. The fan also delivers air into a compressor as core air flow.

The air delivered into the compressors is compressed and delivered into a combustor where it is mixed with fuel and ignited. Products of this combustion pass downstream over turbine rotors driving the turbine rotors to rotate.

Historically, in a two spool engine, a single turbine rotor drove both a low pressure compressor rotor, and a fan, at a constant speed. More recently, a gear reduction placed between the fan and a fan drive turbine. This allows a fan to increase in diameter and rotate at slower speeds than the fan drive turbine.

In another type engine, there are three spools with a separate high pressure turbine driving a high pressure compressor, an intermediate pressure turbine driving a low pressure compressor, and a fan drive turbine driving the fan.

### SUMMARY

In a featured embodiment, a gas turbine engine has a fan section driven, via a gear reduction, by a fan drive turbine in an engine core. The fan section has a fan hub and a plurality of blades extending radially outwardly of the hub to an outer tip. A ratio of an outer diameter of the fan hub at a leading edge of the blades to an outer tip diameter of the blades at the leading edge is greater than or equal to about 0.24 and less than or equal to about 0.38. The fan tip diameter is greater than or equal to about 84 inches (213.36 centimeters) and a fan tip speed is less than or equal to about 1050 ft / second (320.04 meters / second). A bypass ratio, defined as a volume of air delivered by the fan into a bypass duct as compared to a volume of air delivered by the fan into the core, is greater than or equal to 11.0. A gear ratio of the gear reduction is greater than or equal to 3.1. The fan drive turbine has between three and six stages. The fan drive turbine defines a performance quantity which is the product of an exit area of the fan drive turbine multiplied by a square of the speed of the fan drive turbine at sea level take off. The performance quantity is greater than or equal to about 4.0 in²-RPM².

In another embodiment according to the previous embodiment, the fan drive turbine also drives the first compressor rotor.

In another embodiment according to any of the previous embodiments, the first compressor rotor and the fan drive turbine rotate in the same direction and at the same speed as each other.

In another embodiment according to any of the previous embodiments, the first compressor rotor has between one and five stages.

In another embodiment according to any of the previous embodiments, the gear reduction is provided by an epicyclic gear box with at least three idler gears in addition to a sun and ring gear.

In another embodiment according to any of the previous embodiments, there are three turbine stages, with an intermediate turbine stage driving the first compressor rotor and a second compressor rotor operating at a higher pressure than the first compressor rotor with a high pressure turbine stage driving the high pressure compressor rotor.

In another embodiment according to any of the previous embodiments, the first compressor rotor turns in the same direction as the fan drive turbine, but the first compressor rotor rotates at a higher speed than the fan drive turbine.

In another embodiment according to any of the previous embodiments, the first compressor rotor has between five and eleven stages.

In another embodiment according to any of the previous embodiments, the gear reduction is provided by an epicyclic gear box with at least three idler gears in addition to a sun and ring gear.

In another embodiment according to any of the previous embodiments, the fan turns in the same direction as the fan drive turbine.

In another embodiment according to any of the previous embodiments, the gear reduction is provided by an epicyclic gear box with at least three idler gears in addition to a sun and ring gear.

In another embodiment according to any of the previous embodiments, the engine results in an overall thrust of greater than or equal to about 33,000 lbf (146.79 kN).

In another featured embodiment, a gas turbine engine has a fan section driven via a gear reduction by a fan drive turbine in an engine core. The fan section has a fan hub and a plurality of blades extending radially outwardly of the hub to an outer tip. A ratio of an outer diameter of the fan hub at a leading edge of the blade to an outer tip diameter of the blades at the leading edge is greater than or equal to about 0.24 and less than or equal to about 0.38. The fan tip diameter is greater than or equal to about 84 inches (213.36 centimeters) and a fan tip speed is less than or equal to about 1050 ft / second (320.04 meters / second). A bypass ratio, defined as a volume of air delivered by the fan into a bypass duct as compared to a volume of air delivered by the fan into the core air, is greater than or equal to 11.0. A gear ratio of the gear reduction is greater than or equal to 3.1. The fan drive turbine has between three and six stages. The fan drive turbine defines a performance quantity which is the product of an exit area of the fan drive turbine multiplied by a square of the speed of the fan drive turbine at sea level take off. The performance quantity is greater than or equal to about 4.0 in²-RPM². The engine results in an overall thrust of greater than or equal to about 33,000 lbf (146.79 kN). The fan turns in the same direction as the fan drive turbine. The gear reduction is provided by an epicyclic gear box with at least three idler gears in addition to a sun and ring gear.

In another embodiment according to the previous embodiment, the fan drive turbine also drives the first compressor rotor.

In another embodiment according to any of the previous embodiments, the first compressor rotor and the fan drive turbine rotate in the same direction and at the same speed as each other.

In another embodiment according to any of the previous embodiments, the first compressor rotor has between one and five stages.

In another embodiment according to any of the previous embodiments, there are three turbine stages, with an intermediate turbine stage driving the first compressor rotor and a second compressor rotor operating at a higher pressure than the first compressor rotor with a high pressure turbine stage driving the high pressure compressor rotor.

In another embodiment according to any of the previous embodiments, the first compressor rotor turns in the same direction as the fan drive turbine, but the first compressor rotor rotates at a higher speed than the fan drive turbine.

In another embodiment according to any of the previous embodiments, the first compressor rotor has between five and eleven stages.

In another embodiment according to any of the previous embodiments, the first compressor rotor has between five and eleven stages.

These and other features may be best understood from the following drawings and specification.

### BRIEF DESCRIPTION OF THE DRAWINGS

Figure 1 schematically shows a gas turbine engine.
Figure 2 shows an alternative engine.

### DETAILED DESCRIPTION

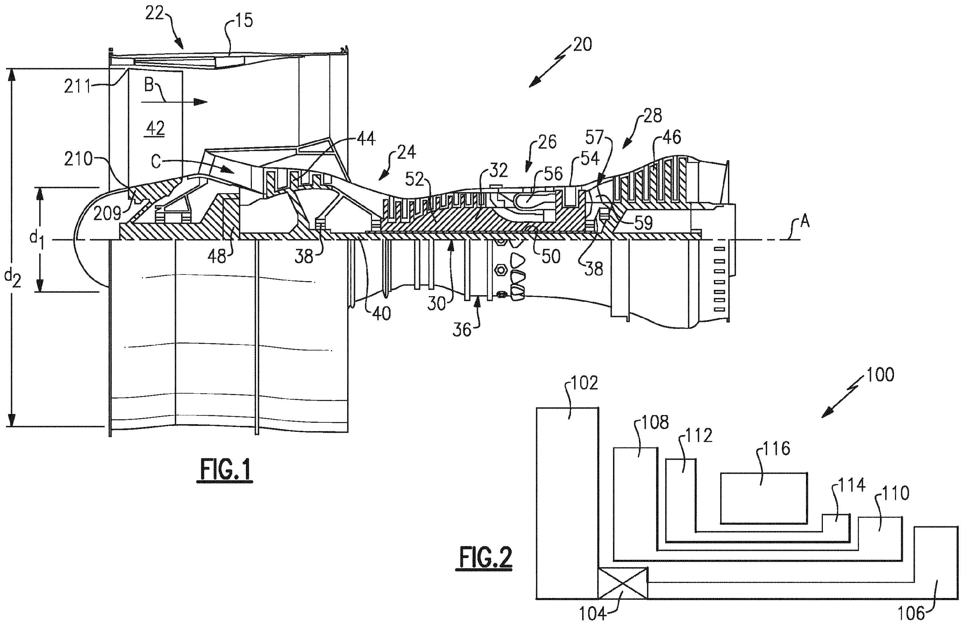

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. The fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle.

A significant amount of thrust is provided by the bypass flow B due to the high bypass ratio. The fan section 22 of the engine 20 is designed for a particular flight condition -- typically cruise at about 0.8 Mach and about 35,000 ft (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1050 ft / second (320.04 m/s).

In embodiments, the gas turbine engine 20 of Figure 1 may deliver a thrust equal to or greater than 33,000 lbf (146.79 kN). This thrust is at sea level take off (SLTO) and at temperatures of 86 degrees Fahrenheit (30°C) or less.

A fan hub 209 defines an inner flow path for air passing over the fan blades 42 as shown schematically. A ratio of a diameter to an outer surface of the fan hub at a leading edge 210 of the blade d₁ over a diameter d₂ to the outer diameter of the blade tip, again at the leading edge, is greater than or equal to about 0.24 and less than or equal to about 0.38. This allows sufficient air to be provided to the first compressor section 44. The fan tip diameter d₂ in this embodiment is greater than or equal to about 84 inches (213.36 centimeters). Further, a fan tip speed is less than or equal to about 1050 ft / second (320.04 m/s), with the rotational speed of the fan drive turbine being greater than 3 times that of the fan.

A bypass ratio for this embodiment is greater than or equal to about 11. A gear ratio of the gear reduction 48 is greater than or equal to about 3.1. Thus, as indicated, a speed of a fan drive turbine is greater than or equal to 3.1 times the fan speed.

The speed change mechanism 48 may be an epicyclic gear box with three or more idler gears in addition to a sun and ring gear. A number of stages in the low pressure compressor 44 may be between one and five, in the embodiment where the fan drive turbine also drives the low pressure compressor. The low pressure turbine 46 has between three and six stages.

Figure 2 shows an embodiment 100 wherein a fan rotor 102 is driven by a gear reduction 104, which is, in turn, driven by a fan drive turbine 106. A low pressure compressor 108 is driven by an intermediate pressure turbine 110, and a high pressure compressor 112 is driven by a high pressure turbine 114. A combustor 116 is placed between the high pressure compressor 112 and the high pressure turbine 114. In the embodiment of Figure 2, the low pressure compressor may have between five and eleven stages.

The ratio of the diameter to the outer surface of the fan hub at the leading edge to the outer diameter of the blade tip as disclosed in the Figure 1 embodiment would hold true for the Figure 2 embodiment. The same is true for the diameter of the fan tip, as well as the fan tip speed. Further, the gear ratio of the gear reduction 104 is greater than or equal to about 3.1. Also, the gear reduction 104 may be an epicyclic gear box with three or more idler gears, in addition to a sun and rain gear as is the speed change mechanism 48.

The features of the embodiments of Figures 1 and 2 will now be disclosed to achieve the very high thrust of greater than or equal to 33,000 lbf (146.79 kN) at SLTO.

A performance quantity known as AN² is defined as the exit area of the fan drive turbine times the speed square of the fan drive turbine at SLTO. In an embodiment, the AN² for the fan drive turbine 46 or 106 is greater than or equal to about 4.0 in²-RPM².

A gas turbine engine with the quantities as described above is operable to provide thrust greater than or equal to about 33,000 lbf (146.79 kN), again at SLTO at temperatures less than or equal to 86 degrees (30°C).

In further embodiments, the fan blades 42 turn in the same direction as the fan drive turbine 46 or 106. The low pressure compressor 44 turns the same direction and speed as the fan drive turbine 46. In the Figure 2 embodiment, the low pressure compressor 108 would rotate at the same direction and speed as the intermediate pressure turbine 110.

In the three spool embodiment, the low pressure compressor 108 will rotate at faster speeds than the fan drive turbine 106.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine (20) comprising:
a fan section (22; 102) driven, via a gear reduction (48; 104), by a fan drive turbine (46; 106) in an engine core,
said fan section (22; 102) having a fan hub (209) and a plurality of blades (42) extending radially outwardly of said hub (209) to an outer tip,
a ratio of an outer diameter (d₁) of said fan hub (209) at a leading edge (210) of the blades (42) to an outer tip diameter (d₂) of said blades (42) at the leading edge (210) being greater than or equal to about 0.24 and less than or equal to about 0.38,
said fan tip diameter (d₂) being greater than or equal to about 84 inches (213.36 centimeters) and a fan tip speed being less than or equal to about 1050 ft / second (320.04 meters / second);
a bypass ratio, defined as a volume of air delivered by said fan section (22; 102) into a bypass duct as compared to a volume of air delivered by said fan section (22; 102) into said core, is greater than or equal to 11.0;
a gear ratio of said gear reduction (48; 104) being greater than or equal to 3.1;
said fan drive turbine (46; 106) having between three and six stages.

2. The gas turbine engine (20) as set forth in claim 1, wherein said fan drive turbine (46) also drives a first compressor rotor (44).

3. The gas turbine engine (20) as set forth in claim 2, wherein said first compressor rotor (44) and said fan drive turbine (46) rotate in the same direction and at the same speed as each other.

4. The gas turbine engine (20) as set forth in claim 2 or 3, wherein said first compressor rotor (44) has between one and five stages.

5. The gas turbine engine (20) as set forth in claim 1, wherein there are three turbine stages, with an intermediate turbine stage (110) driving a first compressor rotor (108) and a second compressor rotor (112) operating at a higher pressure than said first compressor rotor (108) with a high pressure turbine stage (114) driving said high pressure compressor rotor (112).

6. The gas turbine engine (20) as set forth in claim 5, wherein said first compressor rotor (108) turns in the same direction as said fan drive turbine (106), but said first compressor rotor (108) rotates at a higher speed than said fan drive turbine (106).

7. The gas turbine engine (20) as set forth in claim 5 or 6, wherein said first compressor rotor (108) has between five and eleven stages.

8. The gas turbine engine (20) as set forth in any preceding claim, wherein said fan section (22; 102) turns in the same direction as said fan drive turbine (46; 106).

9. The gas turbine engine (20) as set forth in any preceding claim, wherein said gear reduction (48; 104) is provided by an epicyclic gear box with at least three idler gears in addition to a sun and ring gear.

10. The gas turbine engine (20) as set forth in any preceding claim, wherein the engine (20) results in an overall thrust of greater than or equal to about 33,000 lbf (146.79 kN).
